# EUROPÄISCHE PATENTSCHRIFT

(11) **EP 2 830 882 B1**
(45) Veröffentlichungstag und Bekanntmachung des Hinweises auf die Patenterteilung: **01.01.2020**
(21) Anmeldenummer: 13712135.6
(22) Anmeldetag: 15.03.2013
(51) Int. Cl.: B41J 3/407

(54) **VERFAHREN ZUM BEDRUCKEN EINES OBJEKTS**
METHOD FOR PRINTING AN OBJECT
PROCÉDÉ D'IMPRESSION D'UN OBJET

(30) Priorität: 29.03.2012 DE 102012006371
(43) Veröffentlichungstag der Anmeldung: 04.02.2015
(73) Patentinhaber: Heidelberger Druckmaschinen AG, 69115 Heidelberg (DE)
(72) Erfinder: BEIER, Bernard, 68526 Ladenburg (DE); PITZ, Heiner, 69469 Weinheim (DE); SCHLÖRHOLZ, Matthias, 68723 Plankstadt (DE); WOLF, Thomas, 69123 Heidelberg (DE)
(86) Internationale Anmeldenummer: PCT/EP2013/000808
(87) Internationale Veröffentlichungsnummer: WO 2013/143659

(56) Entgegenhaltungen:
- EP-A1- 1 839 883
- DE-A1-102006 034 060
- US-A1- 2001 005 942
- US-A1- 2007 062 383

## Beschreibung

Die vorliegende Erfindung betrifft ein Verfahren mit den Merkmalen von Anspruch 1. Weiterhin betrifft die vorliegende Erfindung ein System mit den Merkmalen von Anspruch 11.

### I) Einleitung und Stand der Technik

Es ist bekannt, eine Karosserie eines Fahrzeugs einfarbig oder auch mehrfarbig zu lackieren. Eine mehrfarbige Lackierung kann bereits bei der Produktion oder nachträglich erfolgen. Es ist auch bereits bekannt, die Karosserie mit bunten Bildern zu versehen. Beispielsweise wird Werbung auf der Seite oder dem Heck des Fahrzeugs vorgesehen. Meist wird solche Werbung zunächst auf Folie gedruckt und die Folie anschließend auf die Karosserie übertragen. Das Auftragen der Folie ist umso zeitaufwendiger und schwieriger, je größer die Folie ist und je mehr Krümmungen die Karosserie aufweist. Künstlerisch anspruchsvolle Bilder werden dagegen meist manuell mit der so genannten Airbrush-Technik aufgebracht.

Die DE 37 37 455 A1 offenbart eine Einrichtung zum Erzeugen von Farbmustern. Mittels eines computergesteuerten und von einem Roboter geführten Tintenstrahlsystems werden z.B. gerasterte Bilder in voller Farbe (3 Grundfarben) als Karosserieverzierungen erzeugt. Die Bilder können zudem kundenspezifisch sein.

Die DE 10 2008 053 178 A1 offenbart eine Beschichtungseinrichtung für Karosserien mit einem mehrachsigen Roboter und einem daran montierten Tintenstrahl-Druckkopf. Der Kopf kann mit einem oder mehreren Farbwechslern oder Farbmischern verbunden sein und es können Farben gewechselt und gemischt (z.B. CMYK-Farbsystem) und den Düsen des Kopfes zugeführt werden. Die Farbmischung kann aber auch auf der Bauteiloberfläche erfolgen. Aufgabe der DE 10 2008 053 178 A1 ist es, den so genannten Overspray zu reduzieren. Es soll auch möglich sein, gezielt Details und Grafiken zu drucken. In einer Variante sind mehrere Druckköpfe vorgesehen, die gemeinsam an einem Roboter geführt werden und relativ zu einander schwenkbar sind, was eine Anpassung an gekrümmte Bauteiloberflächen ermöglicht.

Unter dem Namen "Michelangelo" wird zudem ein System angeboten, das ein Gestell und einen Tintenstrahlkopf umfasst, der an dem Gestell in x- und y-Richtung, sowie in z-Richtung, bewegbar ist. "Michelangelo" erlaubt es, relativ ebene Seitenwände, z.B. von Nutzfahrzeugen, mit beliebigen, mehrfarbigen Bildern zu versehen. Das System nutzt eine mechanische Abstandsmessung zwischen Kopf und Druckfläche und erlaubt nur geringe Auflösungen zu drucken. Ein solches System ist in der EP 317 219 B1 offenbart.

Es ist aus der DE102 02 553 A1 auch ein System bekannt, das man als "digitalen Pinsel" bezeichnen könnte. Es handelt sich um ein manuell geführtes System mit einer Matrixanordnung von Düsen zum Bedrucken z.B. von Fassaden oder großformatigen Werbeflächen, also in der Regel relativ ebenen Flächen. Die Position des druckenden Kopfes wird laufend bestimmt und es wird der Farbauftrag an solchen Stellen unterbunden, die bereits bedruckt sind.

Das Dokument US 2001/005942 A1 beschreibt ein Verfahren und ein System zum Bedrucken der Oberfläche eines dreidimensionalen Objektes mit einer komplexen Topographie. Ein Sensor detektiert die Kontur der Oberfläche des Objektes. Zum Bedrucken wird ein Tintenstrahldruckkopf benutzt.

### II) Aufgabe und Lösung

Vor diesem Hintergrund ist es Aufgabe der Erfindung, ein weiteres System zu schaffen, mit dem beliebig geformte Oberflächen von Objekten mit beliebigen Bildern bedruckt werden können.

Ein erfindungsgemäßes Verfahren zum Bedrucken eines Objekts, wobei wenigstens ein Bereich der Oberfläche des Objekts bedruckt wird, ist definiert in Anspruch 1.

Eine bevorzugte Weiterbildung des erfindungsgemäßen Verfahrens kann sich durch einen der folgenden Verfahrensschritt des Synchronisierens auszeichnen: Drucken des Bildes in Abhängigkeit der Bewegung des Roboter; oder Bewegen des Roboters in Abhängigkeit des zu druckenden Bildes.

Eine bevorzugte Weiterbildung des erfindungsgemäßen Verfahrens kann sich durch den folgenden Verfahrensschritt auszeichnen: Trocknen und/oder Härten und/oder Pinnen (stellenweise Verankern am Untergrund) der Farbe oder des Lacks mit einem Roboter-geführten Trocknerkopf nach dem Drucken, insbesondere unter Einsatz von ultravioletter Strahlung, NIR-Strahlung, IR-Strahlung, Heißluft und/oder Laserstrahlung. Alternativ kann auch thermisch oder thermisch beschleunigt chemisch gehärtet werden (z.B. entsprechend dem Verfahren "Natural Cure" der Firma Tritron GmbH in Battenberg-Dodenau, Deutschland). Weiterhin können so genannte Latexfarben, wie z.B. "Aquares" der Firma Sepiax Ink Technology in Klagenfurt, Österreich zum Einsatz kommen. Die Trocknung kann auch in einem separaten Trockenraum ohne Roboterführung erfolgen. Eine bevorzugte Weiterbildung des erfindungsgemäßen Verfahrens kann sich durch den folgenden Verfahrensschritt auszeichnen: Reinigen, insbesondere Waschen und Trocknen, und optional Pudern wenigstens des Bereichs vor dem dreidimensionalen Vermessen. Eine bevorzugte Weiterbildung des erfindungsgemäßen Verfahrens kann sich durch einen der folgenden Verfahrensschritte auszeichnen: Statisches dreidimensionales Vermessen des Bereich unter Einsatz eines während des Messens ortsfesten Messsystems; oder Dynamisches dreidimensionales Vermessen des Bereich unter Einsatz eines Roboter-geführten Mess-Kopfes.

Eine bevorzugte Weiterbildung des erfindungsgemäßen Verfahrens kann sich durch den folgenden Verfahrensschritt auszeichnen: Auftragen einer Grundierung und/oder eines Primers wenigstens im Bereich vor dem Drucken.

Eine bevorzugte Weiterbildung des erfindungsgemäßen Verfahrens kann sich durch einen der folgenden Verfahrensschritte auszeichnen: Drucken eines ersten Teiles des Bildes mit dem Tintenstrahl-Druckkopf; Bewegen, insbesondere Drehen, des Objekts in eine veränderte Position; und Drucken eines zweiten Teiles des Bildes mit dem Tintenstrahl-Druckkopf.

Eine bevorzugte Weiterbildung des erfindungsgemäßen Verfahrens kann sich durch den folgenden Verfahrensschritt auszeichnen: Wechsel des Tintenstrahl-Druckkopfes gegen einen anderen, verschiedenartigen Druckkopf, insbesondere einen verschiedenartigen Tintenstrahl-Druckkopf.

Eine bevorzugte Weiterbildung des erfindungsgemäßen Verfahrens kann als weitere vorbehandelnde Prozessschritte eine Koronabehandlung, eine Atmosphären-Plasmabehandlung, eine Beflammung und/oder eine Beaufschlagung mit Heißluft umfassen.

Eine bevorzugte Weiterbildung des erfindungsgemäßen Verfahrens kann als weitere nachbehandelnde Prozessschritte eine Bestrahlung mit IR oder NIR, eine Beaufschlagung mit Heißluft und/oder eine Hitzebehandlung in einem Ofen umfassen. Die Nachbehandlung dient insbesondre der Haftverbesserung.

Die Wärmebehandlung (sowohl als Vor- als auch als Nachbehandlung) kann Oberflächentemperaturen von etwa 40°C bis etwa 240°C erzeugen, bevorzugt von etwa 60°C bis etwa 140°C. Die Wärmebehandlung (sowohl als Vor- als auch als Nachbehandlung) kann über eine Zeitspanne von etwa 1 ms bis etwa 1 h erfolgen, bevorzugt von etwa 1/10 s bis etwa 10 min.

Ein erfindungsgemäßes System zum Bedrucken eines Objekts, welches wenigstens einen Bereich der Oberfläche des Objekts bedruckt, ist in Anspruch 11 definiert.

Das erfindungsgemäße System weist einen Roboter und einen an diesem aufgenommenen Druckkopf auf. Der Kopf wird mittels des Roboters entlang und beabstandet zur Oberfläche des zu bedruckenden Objekts geführt. Daten für das zu druckende Bild und Daten der Oberfläche des Objekts werden einem Rechner zugeführt. Die Daten der Oberfläche des Objekts werden zuvor messtechnisch ermittelt. Der Rechner berechnet, welcher Punkt des Bildes auf welchen Punkt der Objektoberfläche gedruckt wird. Bei mehrfarbigem Druck erfolgt diese Berechnung für jeden Farbauszug. Die berechneten Daten werden für die Bahnführung des Roboters und das Ansteuern des Druckkopfes verwendet.

Das System bzw. das mit dem System durchgeführte Verfahren erreicht eine Druckgenauigkeit von wenigstens 100 dpi (1/4 mm Druckgenauigkeit) bis zu 300 dpi. Bevorzugt sind Druckgenauigkeiten von etwa 1/10 mm beim Bedrucken größerer Objekte, wie z.B. Fahrzeuge.

Ein weiteres Verfahren ist ein Verfahren zum Bedrucken eines Objekts, insbesondere eines Fahrzeugs, mit wenigstens einem Bild, wobei das Bild von einem Kunden ausgewählt wird und wobei das ausgewählte Bild von einem Dienstleister unter Anwendung wenigstens eines der vorgenannten Verfahren und/oder unter Einsatz des vorgenannten Systems an einem vom Kunden ausgewählten Oberflächenbereich auf das Objekt gedruckt wird. Eine alternative Anwendung findet im Rahmen der Serienproduktion der Objekte, insbesondere der Fahrzeuge statt. Beispielsweise können Serienprodukte am Ende des Produktionsprozesses erfindungsgemäß individuell verändert und/oder gestaltet werden.

### III) Definitionen

Im Folgenden werden Definitionen für Begriffe gegeben, die in der Anmeldung Verwendung finden.
Objekt: Ein dreidimensionaler Körper mit einer Oberfläche, welche wenigstens eine Krümmung, eine Kante, einen Knick, ein Loch und/oder eine Hinterschneidung etc. aufweist, beispielsweise ein Fahrzeug (Land-, Wasser-, Luft- und/oder Raumfahrzeug) für den Transport von Gütern und/oder Personen. Spezielle Beispiele sind PKW mit deren Karosserie, Nutzfahrzeuge mit großflächigen Seitenwänden, der Tank eines Motorrads oder der Helm eines Motorradfahrers. Weitere Beispiele sind Kühlschranke oder sonstige so genannte "weiße Ware", Computer-Gehäuse, Möbel, Spielwaren oder Kofferschalen. **Bild:** Ein zweidimensionaler Bereich, in dem sich (gerastert oder ungerastert) ein Text, ein Muster, ein Logo, eine Zeichnung, eine Fotografie, ein Farbverlauf und/oder ein Farbwechsel befindet.
**Kunde:** Die Person, die die Dienstleistung des Auftragens eines Bildes auf ein Objekt in Anspruch nimmt.
**Dienstleister:** Die Person, die die Dienstleistung des Auftragens eines Bildes auf ein Objekt ausführt.
**Systemanbieter:** Die Person, die dem Dienstleister Hardware, Software und/oder Daten für die Durchführung der Dienstleistung zur Verfügung stellt, z.B. zur Miete oder zum Kauf.
**Hersteller:** Die Person, die die Hardware und/oder die Software herstellt oder aus bereits bestehenden Komponenten integriert. Der Hersteller kann auch der Systemanbieter sein.
**Roboter:** Eine stationäre oder mobile Bewegungsvorrichtungen mit mehreren Achsen für das Bewegen eines Effektors, z.B. eines Druckkopfes und/oder eines Trockner-Kopfes und/oder eines Mess-Kopfes und/oder eines Projektions-Kopfes. Es kann sich um einen Industrieroboter (andere Bezeichnung: Roboterarm oder Manipulator), einen Portal-Roboter oder auch um eine Kombination beider handeln (auch mehrere Roboterarme - bevorzugt zwei oder drei - an einem Portal sind möglich). Der Industrieroboter kann als Gelenkarm-Roboter (5, 6, 7 oder mehr Achsen) oder als Parallelkinematik-Roboter ausgeführt sein. Es kann auch ein kleinerer Roboterarm an einem größeren Roboterarm angeordnet werden. Der Portal-Roboter kann mit 3 Linearachsen ausgestattet sein (xyz-Koordinatensystem). Auch bionische Systeme sind möglich. Der Roboter kann weiterhin auf einer Linearführung oder einem Drehteller aufgenommen sein, wobei die Linearführung bzw. der Drehteller in die Roboterkinematik und -steuerung eingebunden sein kann. Auch ein schwenk- oder kippbares Portal ist möglich.

### IV) Allgemeine Beschreibung

### 1. Vorbereiten der Daten

Der Kunde kann dem Dienstleister zweidimensionale Daten des Bildes (jpg, tiff, pdf, o.ä.) zur Verfügung stellen, z.B. mittels mobiler Datenträger oder über ein Datennetz. Die Daten können aber auch aus allgemein zugänglichen Datenbanken oder aus Datenbanken des Dienstleisters oder des Systemanbieters geladen werden. Kommt das System bei einem Serienfertiger, z.B. einem Fahrzeug-Hersteller, zum Einsatz, so können die Bilder auch vom Serienfertiger zur Verfügung gestellt werden.

Dreidimensionale **Daten des Objekts,** insbesondere seiner Oberfläche, können ebenfalls aus allgemein zugänglichen Datenbanken oder aus Datenbanken des Dienstleisters, des Systemanbieters oder des Herstellers des Objekts, z.B. des Serienfertigers, geladen werden. Bevorzugt wird jedoch, das Objekt vor dem Bedrucken individuell zu vermessen und die dabei gewonnenen individuellen Daten für das Bedrucken zu verwenden, da es auf diese Weise möglich ist, auch Besonderheiten des Objekts zu berücksichtigen, z.B. An- und Aufbauten oder Beschädigungen. Der Dienstleister und/oder der Systemanbieter (oder auch der Serienfertiger) können individuelle Objektdaten aus der Vermessung speichern und zu einer Datenbank zusammenführen, die die Daten klassifiziert und für die spätere Nutzung bereithält. Beispielweise können eingescannte Oberflächen von Fahrzeugen gespeichert und nach Fahrzeug-Model klassifiziert abgelegt werden. Aus einem Vergleich mehrerer Messungen an gleichen Fahrzeugen, z.B. Opel Vectra B Kombi, kann für das jeweilige Model ein generalisierter Datensatz erstellt werden, der die allgemeinen Merkmale der Karosserie widerspiegelt und für das Darstellen des Bildes auf dem Fahrzeug noch vor der individuellen Messung genutzt werden kann.

Es kann vorgesehen sein, dem Kunden das voraussichtliche Bild auf dem Objekt zwei- oder dreidimensional darzustellen, z.B. auf einem 2D- oder 3D-Display, mittels einer Projektion auf das Objekt oder mittels einer so genannten Augmented-Reality-Brille. Für die Projektion kann ein so genannter Beamer eingesetzt werden, der z.B. stationär oder an einem Roboter aufgenommen ist. Dabei kann der Kunde **Änderungswünsche** vorbringen, z.B. Größe, Position, Untergrundfarbe, Farbraum und/oder Perspektive, Bildmanipulationen (z.B. Dehnungen, Stauchungen), die der Dienstleister dann umsetzt. Es kann dabei auch festgelegt werden, welche Bereiche der Objektoberfläche nicht bedruckt werden sollen, z.B. Türgriffe oder Fenster. Auch das geänderte Bild kann wieder auf dem Objekt dargestellt werden. Alternativ kann der Kunde mittels einer ihm zur Verfügung gestellten Software oder App Änderungswünsche an einem beliebigen Ort, also auch Zuhause vornehmen.

Alle genannten Daten und Änderungen werden in der Software zum Bedrucken des Objekts berücksichtigt.

### 2. Vorbereiten des Objekts für das Vermessen

Falls notwendig, können vor dem Bedrucken noch **Reparaturen** ausgeführt werden, z.B. Ausbeulen, Spachteln, Schleifen. Falls notwendig, können auch **Aufbauten** entfernt werden, z.B. Antennen, Spiegel, Spoiler und/oder Anhängerkupplung.

Falls notwendig, können vor dem Bedrucken **ältere Bilder** entfernt werden, insbesondere wenn es sich um Bilder handelt, die als **Folie** aufgebracht wurden. Das Entfernen kann erfolgen durch: Lösemittel (z.B. Aceton), Heißdampf, Schleifmittel, Laserstrahlung und/oder bleichender UV-Strahlung. Dabei kann entweder nur die zu entfernende Farbschicht allein entfernt werden, oder es kann zusätzlich auch eine Grundierung, eine Zwischenschicht und/oder eine Haftvermittlerschicht mit entfernt werden.

Falls das Objekt zuvor bereits **erfindungsgemäß oder ähnlich bedruckt** wurde, kann das vorhandene Bild wie folgt entfernt werden: **Anlösen und Entfernen des Bildes,** insbesondere wenn dieses nicht mit einem Decklack versehen wurde, z.B. mit Lösemittelsprüh, Polierbausch, Wasserstrahl, Bürsten, rotierenden Bürsten, Waschstraße und/oder Dampfstrahler. Das Lösemittel kann ein reines organisches Lösemittel sein, z.B. Aceton oder Isopropylalkohol, oder ein Gemisch, z.B. Benzin oder z.B. Aceton mit Ethanol, oder ein wässriges oder teilwässriges System, z.B. Wasser oder z.B. Isopropylalkohol mit Wasser. Das Lösemittel kann zudem ein oder mehrere Additive enthalten. Ein Additiv kann dabei ein klassisches Tensid, z. B. ein Micellenbildner sein oder eine anderweitig oberflächen- oder grenzflächenaktive Substanz, z. B. Semi-Perfluoro-Phosphonsäure, Polyethersiloxan. Auch können Scheuerpartikel enthalten sein, wie z.B. es bei gängigen Autolack-Polierpasten üblich ist.

Es können auch so genannte "intelligent fluids" zu Einsatz kommen, (z.B. "DWR 95 PLUS liquid - Druckwalzenreiniger" der Firma bubbles & beyond GmbH, Leipzig. Der Reinigungsvorgang wird wie folgt durchgeführt: Einsprühen des Objekts mit dem teilwässrigen, handelsüblichen Reiniger "DWR 95 Plus liquid"; 1 bis 60 Sekunden Einwirkdauer, wobei das Reinigungsmittel unter die vorhandenen Farbflächen kriecht und somit die **Haftung auf dem Substrat verringert oder aufhebt;** Abwaschen oder Abreiben der Farbe und des Reinigers; ggf. Klarspülen mit Wasser oder zweitem teilwässrigen Reiniger, z.B. Wasser mit Tensid; Trocknen mit warmer Luft. Dieser Prozess wird bevorzugt in einer entsprechend ausgerüsteten Waschstraße durchgeführt.

Schließlich kann das Objekt einer **Reinigung** zum Entfernen von Staub, Schmutz, Schutzwachs oder Ähnlichem unterzogen werden, z.B. gewaschen und getrocknet werden. Es kann für eine Kalibrierung der folgenden Vermessung erforderlich sein, zunächst die vorhandene **Farbe des Objekts** (d.h. seinen Farbort in einem für das spätere Bedrucken gewählten Farbraum) zu bestimmen, z.B. die Farbe eines Lackes.

Es kann zudem für eine weniger fehleranfällige, konturschärfere Vermessung des Objekts erforderlich sein, die Oberfläche des Objekts zu **bepudern,** vorzugsweise mit weißem Puder, oder mit einem Entspiegelungsspray zu **entspiegeln.** Es kann auch vorgesehen sein, lokal ein optisch streuendes Mittel oder ein Muster aufzudrucken, z.B. per Inkjet. Das Muster kann zu gewünschten Moiré-Erscheinungen bei Einsatz von Streifenprojektions-Messverfahren führen. Der Puder kann zugleich eine reinigende Wirkung haben und/oder als **Grundierung** für das spätere Bedrucken z.B. mit UV-Tinten wirken. Im letzteren Fall würde der Puder nach dem Vermessen nicht entfernt, sondern auf der Oberfläche belassen werden und erst nach dem Bedrucken entfern werden.

### 3. Vermessen des Objekts

Es erfolgt die **dreidimensionale Vermessung** des/der zu bedruckenden Abschnitts/Abschnitte der Oberfläche des Objekts oder der gesamten Oberfläche. Dabei werden die Raumpunkte der Oberfläche bzw. des Abschnitts/der Abschnitte in Form einer so genannten **Punktewolke** mit einer bevorzugten Präzision in allen drei Raumrichtungen von unter etwa 1 Millimeter oder besonders bevorzugt im Bereich von etwa 0,1 Millimeter gewonnen. Das Objekt, insbesondere wenn es sich um ein Fahrzeug handelt, befindet sich hierzu bevorzugt in einem Raum, bevorzugt in einer Halle und ist bevorzugt mechanisch fixiert und definiert im Raum positioniert.

Um aus mehreren Einzel-Vermessungen anschließend eine einzige Punktewolke fehlerfrei zusammensetzen zu können, kann es erforderlich sein, **Orientierungsmarken** im Raum einzusetzen, z.B. Klebepunkte, Kugeln und/oder kontrastreiche Marken. Diese können außerhalb oder innerhalb des Objekts befinden oder an seiner Oberfläche angebracht sein, z.B. Klebepunkte an den Fahrzeug-Spiegeln, den -Scheiben, den -Nummernschildern oder den -Leuchten oder Kugeln mit Stativ auf dem Fahrzeugdach oder schachbrettartige Muster (z.B. auch an Wänden der Halle). Als Orientierungsmarken können auch markante Stellen des Objekts selbst eingesetzt werden, z.B. Nummernschild, Türschlösser oder Antennen.

Es können handelsübliche 3D-Messsysteme eingesetzt werden, welche z.B. auf Basis von Weißlicht, Laser-Streifenprojektion, Laufzeitmessungen, Photogrammmetrie oder optischem Tracking arbeiten.

Die Vermessung kann **statisch** erfolgen: Mehrere 3D-Messsysteme sind ortsfest um das Objekt herum positioniert (z.B. an der Hallendecke oder den Hallenwänden) oder es wird ein mobiles 3D-Messsystem mehrfach neu positioniert. Die Messungen liefern eine zusammenzusetzende, dreidimensionale, digitale Punktewolke des Objekts bzw. seiner Oberfläche. Konkret sei das Gerät "Faro Laserscanner Focus 3D" der Firma Faro, Deutschland für solche Messungen genannt (1 bis 5 Meter Arbeitsabstand, 1 Millimeter Datenpräzision).

Die Vermessung kann **dynamisch** erfolgen: Hierzu wird ein Handmessgerät manuell oder mit einem Roboter um das Objekt herum geführt. Die maschinelle Bahnführung kann dabei auf dreidimensionale Daten eines entsprechenden Objekts in vorhandenen Datenbanken zurückgreifen, z.B. auf 3D-Karosseriedaten des Fahrzeugherstellers. Zusätzlich kann ein Abstandssensor zum Einsatz kommen. Auf diese Weise kann das Messgerät im gewählten Arbeitsabstand zum Objekt geführt werden. Die Datenerfassung kann bezogen auf ein (Welt-) Koordinatensystem erfolgen, z.B. relativ zur Halle oder sonstigen gewählten Fixpunkten. Alternativ kann die Datenerfassung bezogen auf bereits erfasste Daten des Objekts erfolgen, z.B. streifenförmige, an einander anschließende Messabschnitte. Konkret sei das Gerät "Faro Laser ScanArm" der Firma Faro, Deutschland für solche Messungen genannt (8 bis 10 Zentimeter Arbeitsabstand, 0,1 Millimeter Datenpräzision) oder Geräte der Firma Steinbichler Optotechnik, Deutschland.

Die Vermessung kann **kaskadiert** erfolgen: Dabei wird die Oberfläche in einem ersten Schritt zunächst auf etwa 1 bis etwa 10 Millimeter genau und mit hoher Geschwindigkeit vermessen, z.B. statisch (siehe oben). Danach können kritische Abschnitte der Oberfläche mit extremen Krümmungen, Kanten, Knicken o.ä. in einem zweiten Schritt mit höherer Auflösung und geringerer Geschwindigkeit nach vermessen werden, z.B. statisch oder dynamisch (siehe oben). Stellen, an denen ein (feineres) Nachmessen erforderlich ist, können z.B. aus einer Überlagerung des zu druckenden Bildes mit den (gröberen) Positionsdaten aus dem ersten Schritt identifiziert werden, denn dabei wird erkennbar, wo Bildbereiche und Extremstellen zusammenfallen.

Der zweite Schritt kann auch erst **während des Bedruckens** des Objekts erfolgen. Hierzu wird das Messgerät einem Druckkopf vorgeordnet und liefert während der Bahnführung des Druckkopfes mittels eines Roboters Positionsdaten, um die Bahnführung des Druckkopfes auf etwa 1/10 bis etwa 1/100 Millimeter genau zu regeln. Die Messdaten können dabei (für das Anpassen der Punktwolke) in Bezug zu den oben genannten Orientierungsmarken gesetzt werden. Alternativ können die Messdaten in Bezug zu bereits gedruckten, benachbarten Bereichen gesetzt werden. Letzteres erfordert jedoch eine zusätzliche Videosensorik zum Aufnehmen des bereits gedruckten, benachbarten Abschnitts und eine Datenverarbeitung, die während des Druckens anhand der aufgenommenen Bilder erkennt, wo sich der Druckkopf aktuell befindet und dies in der weiteren Bahnführung berücksichtigt. Konkret sei wiederum das Gerät "Faro Laser ScanArm" der Firma Faro, Deutschland genannt, das auch während einer Bewegung Daten liefern kann. Selbstverständlich muss der Roboter in der Lage sein, mittels der auf diese Weise ständig aktualisierten Daten geführt zu werden. Konkret sei hier Roboter der Firma Kuka, Deutschland genannt. Denkbar wäre auch, den Druckkopf mittels eines Piezoangetriebenen xyz-Stellmechanismus am Roboter in seiner Position ständig auf Basis der gemessenen Positionsdaten auf etwa 1/100 Millimeter genau zu korrigieren.

### 4. Überarbeiten der Daten

Aus den gemessenen Positionsdaten der Oberfläche des Objekts (aus der Punktewolke) kann unter Verwendung handelsüblicher Software, z.B. PolyWorks der Firma InnovMetric, Kanada, ein der vermessenen Oberfläche entsprechendes **3D-Netz** generiert werden. Dabei oder anschließend kann mittels der Software eine Optimierung und Sortierung der Daten erfolgen, z.B. können vorhandene Krümmungsradien, Flächen und Kanten ermittelt werden. Auf diese Weise können bei Fahrzeugen z.B. Scheiben, deren Dichtungen, Nummernschilder, Türschlösser o.ä. identifiziert und von den zu bedruckenden Bereichen bzw. aus der zu planenden Bahnführung ausgenommen werden.

Es kann von Vorteil sein, die 3D-Positionsdaten der Vermessung lokal oder sogar global zu **reduzieren,** z.B. um die Generierung des 3D-Netzes zu beschleunigen. Die Reduktion kann in Abhängigkeit des Bildes und/oder des Objektes erfolgen. Lokal kann es auch von Vorteil sein, die 3D-Positionsdaten durch **Interpolation** zu verdichten, z.B. wenn die lokale Vermessung zu wenige Daten lieferte.

Die nun zur Verfügung stehenden Daten (Punktewolke, 3D-Netz und daraus ermittelte Daten) werden sowohl bei der Planung der **3D-Roboter-Bahnführung** als auch bei dem **3D-RIP** (Raster Image Processing) der 2D-Bilddaten als Eingangsgrößen verwendet. Weitere Eingangsgrößen sind die Größe des Inkjet-Kopfes (oder zum Einsatz kommender, verschieden geformter Inkjet-Köpfe), der Arbeitsabstand (einzuhaltender Abstandsbereich der Düsenöffnungen des Inkjetkopf von der Objekt-Oberfläche), der Raum samt Hindernissen, in dem sich das Objekt befindet und in dem sich der Roboter bewegt, sowie Limitierungen, denen der Roboter in seiner Bewegung unterliegt.

Bei der Aufbereitung der Daten für die 3D-Bahnführung ist es von Vorteil, **Bereiche** zu definieren, in die der Roboter **nicht eindringen** darf und Bereiche, in denen der Roboter sich frei bewegen kann. Erstere sind in der Regel mit dem vermessenen Objekt korreliert, d.h. der Roboter darf **nicht mit dem Objekt kollidieren** und muss einen Mindestabstand halten. Dies gilt nicht nur für den am Roboter aufgenommenen Druckkopf, sondern auch für den gesamten Roboter, z.B. dessen Armteile und Gelenke, die sich bei Roboterbewegungen während der Bahnführung nur im erlaubten Bereich aufhalten und bewegen dürfen. Die beiden Bereiche können auch dynamisch definiert sein, z.B. wenn sich das Objekt durch Wegnehmen oder Hinzufügen von Objektteilen, wie z.B. Aufbauten bei Fahrzeugen, während des Bedruckens verändert.

Der **3D-RIP** erzeugt eine zwei- oder drei- oder mehrdimensionale Matrix, wobei die vorhandenen, zweidimensionalen (d.h. ebenen bzw. ungekrümmten) Bilder unter Berücksichtigung der dreidimensionalen (d.h. nicht-ebenen bzw. im Raum gekrümmten oder geknickten o.ä.) Oberfläche bzw. der bei der Vermessung derselben gewonnen Daten des Objekts gerastert werden (z.B. AM- oder FM-Raster). Der 3D-RIP kann dabei Dehnungen und/oder Stauchungen des Bildes durchführen.

Es ist wichtig zu wissen und zu beachten, dass **3D-Roboter-Bahnführung und 3D-RIP** in der Regel **abhängig voneinander** sind: i) Es kann erforderlich sein, eine Stelle der Oberfläche mehrfach zu überstreichen, z.B. aus Gründen der Druckqualität (Multipass-Druckmodus), der Bahnführung insgesamt, der lokalen und/oder benachbarten Krümmungsradien und/oder des gewählten Inkjet-Kopfes bzw. seiner Geometrie. ii) Bei einfachen Oberflächen kann die Bahnführung von den gemessenen 3D-Daten bestimmt werden und der 3D-RIP wird die somit vorgegebene Bahnführung berücksichtigen, während bei extremeren Oberflächen (starke Krümmungen, Kanten, Knicke, Löcher) die Bahnführung vom vorgegebenen 3D-RIP bestimmt werden kann. Beispielweise dann, wenn die Algorithmen zur Überführung bestimmter Rasterbereiche in einander ortsabhängig und nicht einfach auf das gesamte Objekt übertragbar sind. iii) Bei einfachen Bildern kann die Bahnführung von den möglichen Roboterbewegungen bestimmt werden und der 3D-RIP wird die somit vorgegebene Bahnführung berücksichtigen, während bei komplizierteren Bildern die Bahnführung vom vorgegebenen 3D-RIP bestimmt werden kann. Beispielweise wieder dann, wenn die Algorithmen zur Überführung bestimmter Rasterbereiche in einander ortsabhängig und nicht einfach auf das gesamte Objekt übertragbar sind. Es kann eine einmaliges (single pass) oder ein mehrmaliges (multi pass) Überstreichen der Oberfläche vorgesehen sein.

Beim 3D-RIP kann es von Vorteil sein, zunächst verschiedene **Perspektiven** festzulegen, z.B. das Objekt von vorne oder von der Seite, und dann für jede Perspektive einen separaten 3D-RIP durchzuführen. Die auf diese Weise erhaltenen Rasterdaten können später in einzelnen Schritten aufgedruckt werden, also z.B. von vorn und von der Seite, wobei Übergänge erzeugt werden. Dieses Vorgehen kann von Vorteil sein, wenn das Objekt im Wesentlichen kastenförmig ist, z.B. ein LKW bzw. dessen Aufbau. Alternativ kann es von Vorteil sein, die Rasterdaten der verschiedenen Perspektiven schon beim 3D-RIP zusammenzuführen und in einem Schritt aufzudrucken, z.B. bei Objekten, deren Seiten stark gewölbt sind und fließend ineinander übergehen, z.B. die aerodynamische Karosserie eines PKW. Die gleichen Bilddaten können auch mehrfach einem 3D-RIP unterzogen werden, z.B. für das gleiche Bild auf geschlossener und geöffneter Tür oder bei vorhandenem und nicht vorhandenem Aufbauteil.

Die Bahnführung kann **lokal von einer ansonsten eher geradlinigen Führung abweichen.** Beispielsweise kann entlang einer Seitentür eines KFZ der Druckkopf im Wesentlichen in horizontalen oder vertikalen Bahnen geführt werden, während der Kopf um den Türgriff der Tür auf einer im Wesentlichen kreis- oder ellipsenförmigen Bahn geführt wird.

Sogenannte **Singularitäten,** bei denen zwei oder mehr Achsen des Roboterarms kollinear sind, können weitgehend vermieden werden, indem der Druckkopf schräg an Roboterarm aufgenommen wird. Zudem kann im Bereich zu erwartender Singularität die Bahngeschwindigkeit verlangsamt werden.

Beim 3D-RIP können auch **Fehler oder Beschädigungen** der Objekt-Oberfläche, z.B. eines gebrauchten PKW, berücksichtigt und ggf. ausgeglichen werden. So kann z.B. eine Verformung der Oberfläche durch kompensierende Änderungen (Dehnungen, Stauchungen etc.) im Bild kaschiert werden. Die beim 3D-RIP vorzunehmenden Änderungen werden dabei so gewählt, dass der optische Eindruck der fehlerhaften oder beschädigten Stelle für den Betrachter aus zumindest einer Perspektive gemildert wird. Um solche Fehler oder Beschädigungen zu identifizieren kann es notwendig sein, die vermessenen Objektdaten mit hinterlegten, fehlerfreien Daten zu vergleichen, z.B. mit Karosseriedaten fabrikneuer Fahrzeuge.

Beim 3D-RIP können auch ungewünschte **Verzerrungen** am aufgedruckten Bild berücksichtigt und kompensiert werden, die z.B. von der Konvex-Konkav-Struktur der Oberfläche herrühren, z.B. bei der Darstellung von Personen, Schriften oder regelmäßigen Mustern.

### 5. Vorbereiten des Objekts für das Bedrucken

Es kann nun erneut notwendig sein, das Objekt zu **reinigen,** z.B. den Puder abzuwaschen.

Es kann auch notwendig sein, vor dem eigentlichen Bedrucken eine **Vorbehandlung** durchzuführen. Dabei kann es sich um eine Corona- oder Atmosphärenplasma-Behandlung oder um eine Beflammung handeln. Die Vorbehandlung kann der Reinigung und/oder der Haftverbesserung dienen. Sie kann in Abhängigkeit von dem Material der Oberfläche gewählt und in ihrer Intensität eingestellt werden, so dass Abschnitte verschiedener Materialien nach der Behandlung in etwa gleiche **Oberflächenspannungen** aufweisen und die aufgedruckten Tropfen überall in etwa gleich spreiten.

Weiterhin kann vor dem eigentlichen Bedrucken eine **Beschichtung oder Grundierung** (z.B. Queller oder Primer) aufgetragen werden. Die Beschichtung kann einen Haftvermittler oder einen Haftverringerer umfassen. Durch das Beschichten und Einstellen der **Hafteigenschaft** der Oberfläche wird es möglich, ein Bild dauerhaft oder nur für eine begrenzten Zeitspanne zu erzeugen. Ein Bild auf einem Fahrzeug kann somit permanent oder temporär, z.B. nur für die Dauer weniger Tage, erzeugt werden. Die Grundierung kann auch einen gerastert oder ungerastert aufgetragenen **Weißlack** umfassen, wodurch der erreichbare Farbraum erweitert werden kann, insbesondere bei dunkel lackierten Karosserieteilen. Die Beschichtung und/oder die Grundierung kann auf die gesamte Oberfläche des Objekts oder nur auf einen ausgewählten Abschnitt aufgetragen werden, vorzugsweise nur auf den Abschnitt, der anschließend auch bedruckt wird. Eine Grundierung kann z.B. auch auf Abschnitten von Glas-Scheiben notwendig sein, die bedruckt werden sollen. Es kann auch vorgesehen sein, **verschiedene Oberflächenmaterialien** mit verschiedenen Grundierungen zu versehen, um die Hafteigenschaften für die verwendete Farbe oder Tinte gezielt einzustellen und möglichst aneinander anzugleichen. Alternativ kann es auch vorgesehen sein, **verschiedene Farben oder Tinten** einzusetzen, die an Oberflächen verschiedener Materialien in etwa gleich gut anhaften.

Neben der Haftvermittung oder auch Haftverringerung kann der Primer die Aufgabe haben, das Verlaufen **(Spreiten)** der Tintentropfen bis zu dem Zeitpunkt zu kontrollieren, zu dem die Tropfen gehärtet werden. Der Primer kann zudem verschiedenartigen Materialien, z.B. Glas, lackiertes Blech oder Kunststoff, derart konditionieren, dass gleichartiges oder ähnliches Spreiten der Tropfen erreicht wird. Das Spreiten kann dabei mittels des Primers so eingestellt werden, dass die einzelnen Tropfen auch zu Vollflächen zusammenfließen können. Ein solches Spreiten kann auch mit physikalischen Vorbehandlungen, wie z.B. einer Koronabehandlung, einer Plasmabehandlung und/oder einer Beflammung, erreicht werden.

Besonders vorteilhaft ist eine Ausführung, bei der der Primer die zu bedruckende Oberfläche weiß abdeckt **(Weißlack, Decklack).** Dies kann zum einen für eine anschließende hochpräzise 3D-Messung von Vorteil sein (sofern der Primer-Auftrag vor dem Vermessen erfolgt) und zum anderen ist ein weißer Untergrund für die Erreichung eines möglichst großen Farbraumes hilfreich. Der weiße Primer kann z.B. aus handelsüblichen Inkjet-Primern bestehen, denen TiO2 als weißes Pigment zugegeben wird. Der Primer kann flächig auf das Objekt aufgebracht werden (Sprüh-, Inkjet- oder sonstiges Verfahren); flächig nur in dem Bereich, in dem das Objekt mit einem Bild versehen werden soll (Sprüh-, Inkjet- oder sonstiges Verfahren); oder punktgenau mittels Inkjet. Bei Bedarf kann der weiße Primer dort entfernt werden, wo er nicht von Rasterpunkten oder Volltonflächen des Bildes abgedeckt wird. Der Primer ist dabei vorzugsweise so formuliert, dass er beispielsweise durch ein Isopropyl-Wasser-Gemisch entfernt werden kann. Mit einem passenden Lösemittel ist daher auch ein späteres gezieltes Entfernen des aufgebrachten Bilds möglich.

Beim Bedrucken von luftbereiften Fahrzeugen kann es erforderlich sein, die Karosserie mechanisch zu **fixieren,** da Temperaturschwankungen während des Druckvorgangs zum Anheben/Absenken des Fahrzeugs führen können. Gleiches gilt für Fahrzeuge, die federnd gelagert sind oder aus sonstigen Gründen zu Eigenbewegungen neigen. solche Fahrzeuge können z.B. an den Angriffstellen für Wagenheber fixiert werden.

Es ist von Vorteil, wenn das Objekt während des gesamten Prozesses nicht bewegt werden muss. Falls es dennoch, z.B. zum Vermessen und/oder Reinigen, an einen anderen Ort und wieder zurück bewegt werden muss, so ist es erforderlich, das Objekt anschließend relativ zur Druckvorrichtung mit bestimmter Genauigkeit zu **positionieren,** z.B. auf etwa 10 bis etwa 100 Mikrometer genau. Zusätzlich oder alternativ kann das Objekt bzw. dessen Position auch neu eingemessen werden. Jedenfalls müssen bei Beginn des Druckvorgangs die Position des Objekts und die Position der Druckvorrichtung in einem gemeinsamen Koordinatensystem (z.B. der Halle) bekannt sein. Beim Drucken kleiner Bilder, deren Lage auf dem Objekt eine größere Toleranz zulässt, kann auf das Positionieren und/oder neue Einmessen verzichtet werden, z.B. beim Drucken einer kleinformatigen Werbung auf der Seitentür eines Fahrzeugs.

Das Positionieren des Objekts kann auch unter Einsatz einer Positioniervorrichtung erfolgen. Von Vorteil ist z.B. ein **Drehteller,** auf dem das Objekt abgestellt wird, und der es erlaubt, das Objekt bevorzugt um wenigstens 180° zu drehen. Auf diese Weise kann das Bedrucken z.B. in zwei Schritten erfolgen: zuerst wird ein erster Teil des Objekts bedruckt, dann wird das Objekt um 180° gedreht und dann wird der restliche Teil des Objekts bedruckt. Auch 90° Drehungen können von Vorteil sein. Bei einem kleinen PKW kann z.B. eine Seite, das Dach und die Motorhaube bedruckt werden, dann eine 180°-Drehung erfolgen und dann die zweite Seite bedruckt werden. Bei größeren Fahrzeugen können mehr Drehungen erforderlich sein.

Alternativ zum einem Drehteller sind auch folgende Positioniersysteme für das Objekt, insbesondere für Fahrzeuge einsetzbar: Über-/Unterdruck-Systeme, (bevorzugt omnidirektional) **verfahrbare Plattformen** (konkret sei das Gerät Kuka omniMove der Firma Kuka, Deutschland genannt), xyz-Portale.

Alternativ oder Zusätzlich zum Drehteller kann es die Positioniervorrichtung auch ermöglichen, das Objekt zu **neigen.** Dies kann dann von Vorteil sein, wenn der Druckkopf kein Drucken nach oben erlaubt. Stellen des Objekts, die von unten bedruckt werden müssen, z.B. Unterseiten von Stoßfängern, würden dann durch entsprechendes Neigen des Objekts in ihrer Winkellage so verändert, dass sie mit dem Druckkopf zur Seite hin oder nach unten bedruckt werden können. Bei kleineren Objekten ist es auch möglich, das jeweilige Objekt mittels eines mehrachsigen Roboters bzw. **Manipulators** während des Druckens zu bewegen und den Druckkopf still zu halten oder nur eingeschränkt zu bewegen. Weiterhin ist es möglich, sowohl das Objekt als auch den Druckkopf mittels jeweiliger Robotern während des Druckens synchronisiert zu bewegen. Es versteht sich, dass die Bewegungen der Positioniervorrichtung bei der Bahnführung des Roboters für den Druckkopf berücksichtig werden müssen. Möglich wäre z.B. ein Fahrzeug auf einem Drehteller permanent langsam zu rotieren und mit einem mehrachsigen Gelenkarmroboter mit Druckkopf zu bedrucken, wobei die Drehbewegung des Fahrzeugs berücksichtigt wird.

Es kann abermals vorgesehen sein, dem Kunden das voraussichtliche Bild auf dem Objekt zwei- oder dreidimensional (virtuell auf einem Display oder real) **darzustellen,** wobei nun bereits alle vorgenommenen Anpassungen berücksichtigt werden können, so dass der Kunde einen Eindruck davon bekommt, wie das fertig bedruckte Objekt aussehen wird. Wiederum können Änderungen vorgenommen werden. Das spätere Drucken kann auch bei eingeschalteter Projektion auf die Objektoberfläche erfolgen, so dass eine direkte Qualitätskontrolle und/oder eine Regelung der Bahnführung möglich werden.

### 6. Drucken

Die Druckvorrichtung umfasst vorzugsweise einen Roboter und wenigstens einen am Roboter angeordneten Druckkopf. Bei dem Druckkopf handelt es sich bevorzugt um einen **Tintenstrahlkopf** (Inkjet). Es können Piezojet-, Bubblejet-, Continuous-Jet- und/oder Valvejet-Druckköpfe zum Einsatz kommen. Piezo-gesteuerte Druckköpfe werden dabei bevorzugt.

Das verwendete Inkjet-System kann über einen **hydrostatischen Ausgleich** verfügen, um den Druck in den Tintenleitungen bzw. den Tinten-Meniskus an den Düsenöffnungen beim Bewegen des Kopfes konstant zu halten. Tank und Ausgleichssystem können gemeinsam mit dem Inkjet-Kopf am Roboterarm geführt werden, um Meniskusschwankungen zu minimieren. Auch kann der Zustand und die Lage des Inkjet-Kopfes mit Sensoren erfasst und Meniskusschwankungen entgegen geregelt werden. Es kann auch vorgesehen sein, die bekannte Bahn des Kopfes im Raum als Eingangsgröße für eine Steuerung des hydrostatischen Ausgleichs zu verwenden.

Es kann vorgesehen sein, einen oder mehrere **Sensoren** zur **Kollisionsvermeidung** zwischen Kopf und Objekt und/oder zur Qualitätssicherung einzusetzen. Dabei können optische und/oder Ultraschall-Sensoren zum Einsatz kommen. Der Arbeitsabstand des Kopfes zur Oberfläche wird auf etwa +/- 5% bis etwa +/- 100% vom Sollwert geregelt, bevorzugt wird auf etwa +/- 10% bis etwa +/- 30%. Konkret seien hier Sensoren der Firma MEL Mikroelektronik, Deutschland genannt, die z.B. für die Regelung auf einen Arbeitsabstand von etwa 10 Millimetern +/- 1 Millimeter eingesetzt werden können. Es kann aber auch vorgesehen sein, dass die Position des Kopfes und des Roboters sehr genau bekannt ist, z.B. über Positionssignale des Roboters, und dass die Kollisionsvermeidung allein dadurch erfolgt, dass die Punktwolke aus der Vermessung des Objekts für die Bewegung des Roboters und des Kopfes einen verbotenen Raum darstellt. Zur Erhöhung der Kollisionssicherheit ist es jedoch ratsam, wenigstens einen Kollisionssensor zusätzlich vorzusehen.

Beim Drucken können verschiedene **Farb- und/oder Lacksysteme** für das Drucken von bunten Bildern zum Einsatz kommen, z.B. CMYK, RGB oder auch erweiterte Farbsysteme wie z.B. CMYK + light cyan + light magenta. Es können ein- oder mehrfarbige Bilder, bunte Bilder, Graustufenbilder oder Schwarzweiß- bzw. Binärbilder erzeugt werden. Um einen möglichst großen Farbraum auch auf nicht weißen Objekten erzeugen zu können, kann es vorgesehen sein, vor oder während des Farbauftrags zusätzlich weiße Farbe oder Tinte (gerastert oder vollflächig) aufzutragen.

Nach erfolgtem Bedrucken kann es vorgesehen sein, einen **Schutz- oder Decklack** auf das gesamte Objekt oder nur auf die bedruckten Abschnitte (und ggf. einen Rand) aufzutragen, z.B. um dessen UV- und/oder Kratzbeständigkeit wunschgemäß einzustellen.

Es kann vorgesehen sein, alle aufzutragenden fluiden Medien (Beschichtung, Grundierung, Tinte, Farbe, Lack, Schutzlack, Decklack) in einem Durchgang auf das Objekt aufzutragen. Hierzu kann der Druckkopf separate **Düsen** für die verschiedenen Medien aufweisen und diese Düsen können separat derart angesteuert werden, dass an jeder Stelle des Objekts die Medien in der richtigen Reihenfolge ausgetragen werden. Alternativ können auch separate Köpfe für die Medien vorgesehen sein, welche gemeinsam oder separat entlang des Objekts geführt werden können.

Es können Systeme verschiedener **fluider Medien** zum Einsatz kommen: wasserbasierte, lösemittelbasierte, UV-härtende, Hotmelt-, Latex-, Gel-, Sol-Gel, 1 Komponenten- und/oder 2 Komponenten-Systeme. Insbesondere können herkömmliche **Lacke** zum Einsatz kommen, z.B. Buntlacke und/oder Klarlacke für Fahrzeuglackierungen. Bevorzugt werden wasserbasierte Systeme. Sofern das aufgedruckte Bild nur temporär vorgesehen sein soll, werden Medien bevorzugt, die sich wieder ablösen lassen, z.B. mittels eines Lösungsmittels oder mit heißem Dampf.

Beim Drucken ist es erforderlich, die Bewegung des Roboters bzw. die Bahnführung mit der Ansteuerung des Druckkopfes zu **synchronisieren,** d.h. der Druckkopf muss in seiner jeweiligen Position der Bahn mit denjenigen Bilddaten zum Öffnen der Düsen angesteuert werden, die an der Position gedruckt werden sollen. Dabei kann es vorgesehen sein, dass die Position des Druckkopfes und seine Bewegungsrichtung die Datenzufuhr bestimmt. Es kann aber auch umgekehrt vorgesehen sein, dass die Datenzufuhr die Position des Druckkopfes und seine Bewegungsrichtung bestimmt. Als dritte Möglichkeit kann es vorgesehen sein, dass zwischen den beiden vorgenannten Möglichkeiten in Abhängigkeit der Oberfläche des Objekts und/oder der Bilddaten hin- und hergewechselt wird.

Sofern die Oberfläche des Objekts starke Krümmungen und/oder Hinterschneidungen aufweist, kann es von Vorteil sein, verschiedene **Druckköpfe mit verschiedenen Geometrien** zu verwenden, z.B. kleine Druckköpfe, um in enge Bereiche drucken zu können (z.B. Fahrzeug-Türgriffe) und große, flache Druckköpfe um schnell und mit möglichst wenigen Spuren ebene Flächen bedrucken zu können (z.B. das Dach eines Fahrzeugs). Es ist auch möglich, Druckköpfe einzusetzen, die **verschiedene Auflösungen** erreichen, z.B. einen 100 dpi- und einen 300 dpi-Kopf. Sofern nur einfarbig gedruckt wird, ist es auch möglich, anstelle eines Tintenstrahl-Druckkopfes einen Stift oder eine Sprühdüse vorzusehen, die mittels des Roboters geführt werden.

Es kann auch vorgesehen sein, eine so genannte **Luftrakel** einzusetzen, um die PositionierGenauigkeit des Düsenkopfes zu verbessern, indem z.B. Luftwirbel und Schleppströmungen reduziert oder gar vermieden werden. Die Luftrakel erzeugt eine definierte Luftströmung und wird gemeinsam mit dem Kopf und diesem vorgeordnet entlang der Oberfläche des Objekts bewegt. Die Luftrakel kann auch derart ausgebildet sein, dass ihre Form an die lokale Oberflächenform des Objekts angepasst werden kann, z.B. in dessen lokale Krümmung/-en. Der Einsatz der Luftrakel kann in vorteilhafter Weise auch dazu führen, dass der Abstand des Kopfes von der Oberfläche größer gewählt werden kann bzw. dass die vom Kopf erzeugten Tröpfchen über eine weitere Entfernung präzise zur Oberfläche fliegen. Alternativ oder zusätzlich zur Luftrakel können auch **Stützströmungen** um einzelne Düsen, um Düsengruppen oder um sämtliche Düsen des Kopfes herum vorgesehen sein, die das präzise Übertragen der Tröpfchen unterstützen.

Auf nicht ebenen Oberflächen (z.B. gebogen oder mit Knicken) sind die jeweiligen Abstände der einzelnen Düsen eines Inkjet-Kopfes zur Oberfläche des Objekts zu einem bestimmten Zeitpunkt verschieden voneinander, was sich nachteilig auf die Bebilderungsqualität auswirkt. Statt die Oberfläche in parallelen Spuren abzufahren, kann die Bahnführung daher in vorteilhafter Weise so gestaltet werden, dass die jeweiligen **Abstände der Düsen zur Oberfläche** des Objekts zu einem bestimmten Zeitpunkt möglichst gleich zueinander sind. Der Kopf kann hierfür z.B. derart über einen Knick geführt werden, dass eine Düsenreihe des Kopfes dabei im Wesentlichen parallel zum Knick ausgerichtet ist. Lokal, z.B. an Knicken, kann daher von einer ansonsten eher zeilenförmigen Bahnführung abgewichen werden, wobei sichergestellt wird, dass eine bereits bedruckte Stelle der Oberfläche kein zweites Mal bedruckt wird, z.B. dadurch, dass ein bereits gedruckter Bildpunkt in der Steuerung als "gedruckt" markiert wird.

Da der Druckkopf in der Regel nicht ausreichend groß und die Oberfläche des Objekts in der Regel zu komplex ist, um das Bild in einem Durchgang zu erzeugen, wird es in dem meisten Fällen erforderlich sein, das Druckbild abschnittsweise, z.B. in **Spuren,** aufzutragen. Die Spuren müssen nahtlos aneinander gefügt werden, so dass im fertigen Druckbild nicht erkennbar ist, an welchen Stellen das Druckbild zusammengefügt wurde. Ein **Zusammenfügen** kann aber auch erforderlich sein, wenn der Roboter nicht weit genug bewegt werden kann, um das gesamte Objekt oder wenigstens eine große Fläche des Objekts in einem Durchgang zu bedrucken. Beispielweise kann es bei Einsatz eines kleinen Gelenkarmroboters mit Inkjetkopf und Bedrucken von großen Fahrzeugen passieren, dass der Arm nur bis etwa zur Mitte des Daches reicht. Dieses Problem kann dadurch gelöst werden, dass das Objekt und/oder der Roboter relativ zueinander bewegt werden, z.B. kann das Fahrzeug um 180° gedreht werden. Gegebenenfalls muss die Position des Objekts nach der Bewegung neu eingemessen werden. Jedenfalls muss das Gesamtbild aus Teilbildern zusammengesetzt werden, wobei das Anfügen der Teilbilder aneinander ohne Lücken und ohne Überlappungen erfolgen sollte, soweit diese für das menschliche Auge als störend empfunden würden. Auch an diesen Beispielen wird ersichtlich, wie wichtig die exakte Synchronisation zwischen Roboterbewegung und Druckkopfansteuerung ist: Es muss beim Drucken zu jedem Zeitpunkt mit ausreichender Genauigkeit bekannt sein, wo sich Druckkopf und Objekt relativ zueinander oder absolut im Raum befinden.

Der Druckkopf kann gesteuert, aber auch geregelt mittels des Roboters geführt werden. Eine **Regelung** kann einen Sensor umfassen, der die aktuelle Ist-Position des Druckkopfes bestimmt und einer Regelungs-Einrichtung zuführt, die diesen Wert mit der Soll-Position abgleicht und ggf. korrigiert. Die Regelung kann dazu eingesetzt werden, sichtbare und störende Anfügestellen zu vermeiden.

Eine **Regelung** mit 500 Hz erreicht bei einer gewünschten Genauigkeit vom 1/10 mm eine Bahngeschwindigkeit von 0,05 m/s. Bei Einsatz eines 10 cm breiten Druckkopfes kann somit eine **Druckgeschwindigkeit** von 18 m²/h erreicht werden (1,8 m²/h bei 1 cm Breite). Falls vorgesehen ist, mit Wechselköpfen verschiedener Breite zwischen 1 und 10 cm zu arbeiten (schmaler Kopf für stark gewölbte Abschnitte, breiter Kopf für im Wesentlichen flache Bereiche der Oberfläche) so ist eine mittlere Druckgeschwindigkeit zwischen etwa 1,8 m²/h und etwa 18 m²/h erreichbar. Im Vergleich zum konventionellen Folienauftrag nach dem Stand der Technik, der etwa 1 m²/h erreicht, bietet das beschriebene Verfahren einen deutlichen Geschwindigkeitsvorteil.

Wird dagegen die Bahnführung im Voraus festgelegt und anschließend **ohne Regelung** durchgeführt, so sind folgende **Druckgeschwindigkeiten** möglich: die gewünschten Genauigkeit vom 1/10 mm ist bei 0,5 m/s erreicht werden und ein 1cm oder 10cm breiter Kopf bedruckt 18 bzw. 180 m²/h. Eine relativ ebene Fläche kann also sehr schnell bedruckt werden, z.B. eine LKW-Seitenwand mit 30 m² in etwa 10 Minuten mit einem 10 cm-Kopf.

Bei Fahrzeugen kann das **Aneinanderfügen von Teilbildern** auch gelöst werden, indem Oberflächenabschnitte der Karosserie bis zu den **Spalten** zwischen den Karosserieteilen in einem Durchgang bedruckt werden, d.h. die Anfügestellen entfallen, da sie genau auf den Spalten zu liegen kommen. Dies setzt jedoch voraus, dass der Roboter derart dimensioniert und beweglich gestaltet wird, dass er wenigstens die einzelnen Karosserieteile, wie z.B. Motorhaube, Kotflügel, Türen, Dach und Heckklappe, jeweils ohne ein Umpositionieren des Roboters und/oder des Fahrzeugs zu bedrucken vermag. Der Roboter sollte also wenigstens Flächen von etwa 1 bis etwa 2 Quadratmetern überstreichen können und eine Reichweite von etwa 1 bis etwa 3 Metern aufweisen.

Es kann von Vorteil sein, das Objekt mehrfach zu vermessen und auch zu bedrucken, z.B. wenn das Objekt über **bewegliche oder abnehmbare Teile** verfügt. Bei einem Fahrzeug könnten solche Teile z.B. Ersatzräder an der Heckklappe, Spoiler, Dachkoffer und/oder Türen sein. Das 3D-Vermessen erfolgt dann jeweils mit und ohne das Teil bzw. in Situationen, in denen das Teil, z.B. die Tür, sich in verschiedenen Positionen befindet. Es liegen dann Objekt-Daten bereit, die das Bedrucken des Objekts ohne das Teil, z.B. ohne den Dachkoffer, und mit dem Teil, also z.B. mit dem Dachkoffer, erlauben. Das Bedrucken kann dann in einem ersten Schritt zunächst nur für das Objekt alleine und in einem zweiten Schritten nur für das Teil alleine erfolgen, wobei das Teil im ersten Schritt entfernt ist und im zweiten Schritt wieder angebracht ist. Entsprechendes gilt für bewegliche Teile: Im ersten Schritt befindet sich das Teil in einer ersten Position und im zweiten Schritt in einer Zeiten Position. Im Falle einer schwenkbaren Tür wird diese z.B. zuerst in geschlossenem Zustand von außen bedruckt und dann wird in geöffnetem Zustand die Tür an den Rändern und ggf. sogar von innen bedruckt. Zusätzlich kann auch die Türausnehmung bei geöffneter Tür bedruckt werden.

Um die Reichweite von Roboterarmen zu erhöhen kann es in vorteilhafter Weise vorgesehen sein, den Roboterarm drehbar und/oder verschiebbar zu lagern, z.B. auf einer **Linearführung.** Eine Führung kann am Hallenboden, der Hallenwand oder der Hallendecke vorgesehen sein. Alternativ kann der Roboterarm auch an einem xyz-Portal angeordnet sein, d.h. an einem Portal, das es erlaubt, den Roboterarm in den drei Raumrichtungen relativ zum Objekt zu verschieben. Wiederum ist es von Vorteil, die aktuelle Position des Roboterarms zu erfassen und bei seiner eigenen Ansteuerung und der des Druckkopfes zu berücksichtigen. Anstelle eines Roboterarms kann auch der Druckkopf selbst direkt an dem xyz-Portal angeordnet sein, bevorzugt drehbar. Ein Portal kann auch weitere Einheiten aufnehmen, z.B. solche für das Reinigen, Trocknen und Härten.

Das **Portal** kann aus zwei vertikalen Säulen und einer horizontalen Traverse bestehen. Die Säulen sind koordiniert und horizontal auf einer Führung bewegbar. Die Traverse ist vertikal bewegbar und nimmt einen horizontal bewegbaren und ggf. noch ausfahrbaren und/oder schwenkbaren Druckkopf auf. Es ist auch möglich, das Portal bogenförmig, z.B. in Form eines Halbkreises, auszubilden und den wenigstens einen Druckkopf daran verfahrbar aufzunehmen. Der Druckkopf kann somit von einer Seite des Objekts bis zur gegenüber liegenden Seite bewegt werden. Auch kann ein Roboterarm mit einem Druckkopf bewegbar an einem bogenförmigen Portal angeordnet werden.

Für das Bedrucken mit kleinen und leichten Druckköpfen könnte auch ein so genannter **Bionic Handling Assistent** der Firma Festo, Deutschland oder Vergleichbares als Roboterarm eingesetzt werden. Dieses bionische System könnte aufgrund seiner hohen Beweglichkeit und Verformbarkeit auch schwer zugängliche Bereiche bedrucken.

Es sind auch **mobile Anwendungen** denkbar, z.B. für das bedrucken von Garagentoren, (Verkehrs-) Schildern, Werbeflächen oder Fassaden. Der Roboter mit dem Druckkopf ist für mobile Anwendungen möglichst kompakt und leicht ausgeführt und ggf. auf einem Fahrzeug oder einer beweglichen Hebebühne montiert. Kleine Roboter-Druckkopf-Vorrichtungen können auch für das Bedrucken von Möbeln und/oder Elektro-/Elektronik-Geräten eingesetzt werden.

### 7. Trocknen

Das aufgedruckte Bild bzw. die verwendeten fluiden Medien kann/können einer **Trocknung und/oder Härtung** unterzogen werden. Es kann z.B. vorgesehen sein, verwendete Lösungsmittel verdunsten zu lassen oder aktiv zu verdunsten, z.B. unter Einsatz von Strahlung und/oder Wärme, wie z.B. Infrarot- oder Nahinfrarot-Strahlung, insbesondere Laser-, Laserdioden oder VCSEL-Strahlung, oder Heißluft bzw. unter Einsatz einer entsprechenden Vorrichtung bzw. eines entsprechenden Arrays. Es kann auch z.B. vorgesehen sein, eine Ultraviolett-Härtung durchzuführen, z.B. unter Einsatz einer entsprechenden UV-Strahlung erzeugenden Vorrichtung, wie z.B. einer UV-Röhre, UV-LED und/oder Elektronenstrahlen. Gegebenenfalls müssen die Druckköpfe vor der Strahlung geschützt werden, z.B. durch Blenden.

Bei einer vorteilhaften Ausführungsform ist die Vorrichtung zum Trocknen und/oder Härten als **Kopf** ausgeführt und an einem Roboter aufgenommen. Der Kopf kann dann mittels des Roboters entlang der Oberfläche des Objekts geführt werden und das aufgetragene Medium lokal trocknen. Es kann vorgesehen sein, dass der Druckkopf und der Kopf zum Trocknen und/oder Härten an demselben Roboter aufgenommen sind oder dass beide als Wechselköpfe vorgesehen sind und im Wechsel vom Roboter aufgenommen werden. Bevorzugt ist der Kopf zum Trocknen und/oder Härten benachbart zum Druckkopf am Roboter angeordnet und trocknet/härtet das gedruckte Bild unmittelbar nach dem Drucken, d.h. die beiden Köpfe werden auf etwa derselben Spur, jedoch hinter- oder nebeneinander geführt.

Die Trocknung/Härtung kann für jedes Medium **separat** (direkt nach dessen Auftrag) erfolgen oder alternativ können mehrere, übereinander aufgetragene Medien **gemeinsam** (direkt nach dem Auftrag des letzten der Medien) getrocknet werden.

Von besonderem Vorteil ist es, die Trocknung/Härtung derart **bildgemäß** durchzuführen, dass nur solche Abschnitte (ggf. mit Rand) der Oberfläche des Objekts behandelt werden, die auch mit aufgedrucktem Medium belegt sind.

Sofern das aufgedruckte Bild nur **temporär** vorgesehen sein soll, kann die Trocknung/Härtung nur teilweise durchgeführt werden, d.h. nur solange oder soweit, bis das Medium ausreichend getrocknet/gehärtet ist, um eine vorgegebene Zeitspanne auf dem Objekt zu haften und dabei die Bildeigenschaften ausreichend zu bewahren. Die auf diese Weise erreichte unvollständige Trocknung/Härtung kann dazu führen, dass das Medium z.B. mit einem geeigneten Lösemittel wie Aceton und/oder durch Reiben wieder entfernt werden kann. Beim Einsatz von 2 Komponenten-Systemen kann dies durch entsprechende Einstellung der Mengenverhältnisse der jeweiligen Einzelkomponenten erreicht werden.

Beim **UV-Härten** kann es notwendig sein, zu verhindern, dass die aufgedruckten Bildpunkte vor dem Aushärten zu stark verlaufen (Verhindern des so genannten Bleeding). Hierzu kann das Härten unmittelbar nach dem Auftragen des Medium erfolgen, bevorzugt in Form eines nur teilweisen Anhärtens (so genanntes Freezing oder Pinning) mit reduzierter Strahlendosis, da dabei auch verhindert wird, dass zu viel Strahlung den (ggf. benachbart angeordneten) Druckkopf erreicht und Medium in oder an den Düsen härtet. Eine alternative Lösung besteht darin, den (ggf. benachbart angeordneten) Druckkopf abzuschotten oder die Strahlungsrichtung des Kopfes zum Härten von dem Druckkopf weg zu wählen oder den Kopf zum Härten in ausreichendem Abstand zum Druckkopf anzuordnen und zu führen. Wieder alternativ können auch so genannte **phase-change-Tinten** eingesetzt werden, die in erwärmtem und dünnflüssigem Zustand verdruckt werden und auf dem kühleren Objekt in kurzer Zeitspanne oder bevorzugt sofort härten.

### 8. Weitere Möglichkeiten

Es ist auch möglich, ein auf das Objekt gedrucktes Bild nach einer Zeitspanne zu verändern, z.B. indem **das vorhandene Bild ganz oder teilweise überdruckt** wird, wobei der zu überdruckende Bereich zuvor entfernt werden kann. Bei einer auf ein Fahrzeug aufgedruckten Werbung kann z.B. der aktuelle Preis und/oder ein aktueller Verkaufstermin/-ort angepasst werden. Bilder, die nicht mehr gewünscht werden, können mit neuen, gewünschten Bildern überdruckt werden. Bilder, die z.B. zerkratzt oder ausgeblichen sind, können stellenweise oder vollständig sausgebessert werden. Zusätzlich oder alternativ ist es möglich weitere Bilder nach einer Zeitspanne **neben bereits vorhandene Bilder zu drucken** und auf diese Weise auf dem Objekt über die Zeit mehr und mehr Bilder zu sammeln. Bei einem Fahrzeug kann sich der Kunde auf diese Weise nach und nach für weitere Bilder entscheiden und diese wie Tätowierungen zu einem Gesamterscheinungsbild zusammenstellen.

Das in dieser Anmeldung beschriebene Verfahren erlaubt auch das Aufdrucken von **amtlichen Zeichen, Prüfsiegeln, Plaketten.** Bei einem Fahrzeug wäre es z.B. möglich, die Nummernschilder und/oder die TÜV-Marken aufzudrucken. Hierzu würden der Software zur Erzeugung des Bildes die notwendigen Daten zur Verfügung gestellt werden, z.B. über einen sicheren und authentifizierten Datenbankzugriff auf eine entsprechende Datenbank einer Behörde und/oder des TÜV. Solche aufgedruckten Zeichen etc. können in vorteilhafter Weise nicht gestohlen werden.

Es können nicht nur optisch wahrnehmbare Strukturen gedruckt werden, sondern auch Strukturen, die andere Funktionen erfüllen, z.B. solche die **eklektisch leitend** sind und als Leiterbahnen funktionieren. Auf diese Weise können elektrische Schaltungen auf die Oberflächen von 3D-Objekten gedruckt werden: OLEDs oder andere Leuchtelemente. Bei Fahrzeugen ist es z.B. möglich, die Leuchten, insbesondere die Bremsleuchten, leuchtende Nummernschilder oder sonstige Muster aufzudrucken.

Anstelle des Auftragen von statischen Bildern, kann es auch vorgesehen sein, mittels Dünnschicht-Druckverfahren für elektronische Strukturen auf der Objektoberfläche wenigstens ein **Display** zu erzeugen, das das Darstellen von wechselnden Bildern oder Filmen erlaubt, z.B. ein OLED-Display.

Bei Einsatz zweier Druckköpfe ist es möglich, auf eine bestimmte Stelle auf dem Objekt nacheinander zwei Komponenten eines **2 Komponenten-System** aufzudrucken, die an der Stelle miteinander, ggf. unter Einwirkung einer Strahlungsenergie, reagieren und härten. Das ausgehärtete Material kann zu einer Konturveränderung führen und z.B. eine beschädigte Stelle ausbessern oder es kann die Rauigkeit oder den optischen Eindruck der Oberfläche verändern.

Auf ähnliche Weise kann automatisiert eine **Reparatur des Objekts** erfolgen: das Objekt wird vermessen, zu reparierende Stellen werden mittels eines Vergleichs mit den Daten eines Original-Objekts identifiziert, der Druckkopf appliziert ein Reparaturmaterial (z.B. eine Spachtelmasse), ein weiterer Kopf schleift das aufgetragene Material und ein dritter Kopf lackiert die reparierte Stelle des Objekts.

Anstelle eines Roboters ist auch ein **manuell geführter Druckkopf** möglich, der in Abhängigkeit von seiner absoluten Position im Raum oder seiner relativen Position zum Objekt mit Steuerdaten für den Druck versorgt wird.

### V) Figurenbeschreibung

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Fig. 1: Eine schematische Seitenansicht eines bevorzugten Ausführungsbeispiels eines erfindungsgemäßen Systems mit einem Gelenkarm-Roboter; und
- Fig. 2: Eine schematische Darstellung eines bevorzugten Ausführungsbeispiels eines erfindungsgemäßen Systems.

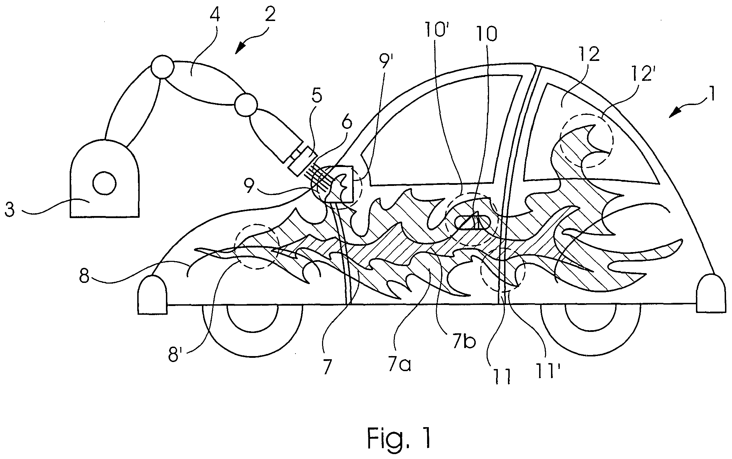

In der Figur 1 ist ein Fahrzeug 1 von der Seite gezeigt, das von einem System 2 bedruckt wird. Das System weist eine Basis 3 und einen aus mehreren, beweglichen Gliedern bestehenden Roboter 4 (Gelenkarmroboter) sowie einen daran angeordneten Druckkopf 5 auf. Die Basis kann drehbar und verfahrbar gelagert sein, so dass der Arm mit dem Druckkopf zum Drucken an alle Stellen des Fahrzeugs heranreichen kann. Der Druckkopf befindet sich während des Druckens in geringem Abstand zur Oberfläche des Fahrzeugs und stößt dabei Tintentropfen 6 aus, die ausreichend Impuls zum Erreichen der Oberfläche aufweisen. Der Abstand kann etwa 1 cm betragen.

Das Fahrzeug 1 wird mit einem Bild 7 bedruckt. Das Bild kann verschiedene Bereiche 7a und 7b aufweisen. Diese Bereiche können sich z.B. dadurch unterscheiden, dass sie verschiedene Farben aufweisen. Sie können sich auch dadurch unterscheiden, dass ein Bereich gerastert (im Halbton-verfahren) gedruckt und ein Bereich ungerastert (im Vollton-Verfahren) gedruckt wird.

Das Fahrzeug 1 als zu bedruckendes Objekt weist eine gekrümmte Oberfläche auf, beispielsweise einen Kotflügel 8, der sich aus der Seitenwand heraus wölbt und daher sowohl konvexe als auch konkave Krümmungen besitzt. Die Krümmungen können sehr kleine Radien aufweisen und sogar als Knicke (Radius 0 Grad) vorliegen. Es ist erkennbar, dass das Bild 7 auch über den Kotflügel reicht und dabei auf einen Bereich 8' der Oberfläche aufgebracht wird, der verschiedene Krümmungen und auch Knicke aufweisen kann.

Es ist auch erkennbar, dass das Bild 7 auf einen Außenspiegel 9 in einem Bereich 9' aufgebracht wird. Das System 2 erlaubt somit auch das Bedrucken von Aufbauten, die an der Oberfläche angeordnet sein. Im Bereich 10' ist erkennbar, dass das System auch das Bedrucken von so genannten Hinterschneidungen erlaubt, z.B. von Türgriffen. Hierzu ist temporär ein sehr kleiner Druckkopf vorgesehen, der in den Bereich des Türgriffs eintauchen kann.

Auch das Bedrucken von Kanten ist möglich: Ein Spalt 11 zwischen einer Seitentür und der Karosserie wird bei geschlossener Tür soweit möglich bedruckt und anschließend bei geöffneter Tür, ggf. wiederrum mit einem nur temporär zum Einsatz kommenden, sehr kleinen Druckkopf fertig gedruckt. Aus einigen Metern Entfernung scheint das Bild 7 unterbrechungsfrei über den Spalt 11 zu reichen. Auch im Bereich 12' einer Scheibe 12, d.h. auf einem anderen Material (Glas statt lackiertes Metall) ist das Drucken möglich. Das erfindungsgemäße System erlaubt es somit in vorteilhafter Weise, die komplette Oberfläche des komplex geformten Fahrzeugs 1 mit einem beliebigen, mehrfarbigen Bild 7 zu versehen. Das Bild kann dabei auch einfarbig sein und schlicht eine Lackierung des Fahrzeugs sein. Bevorzugt ist das Fahrzeug jedoch bereits lackiert und das Bild wird nur lokal zur Verschönerung oder zum Tragen von Information (z.B. Werbung) aufgetragen.

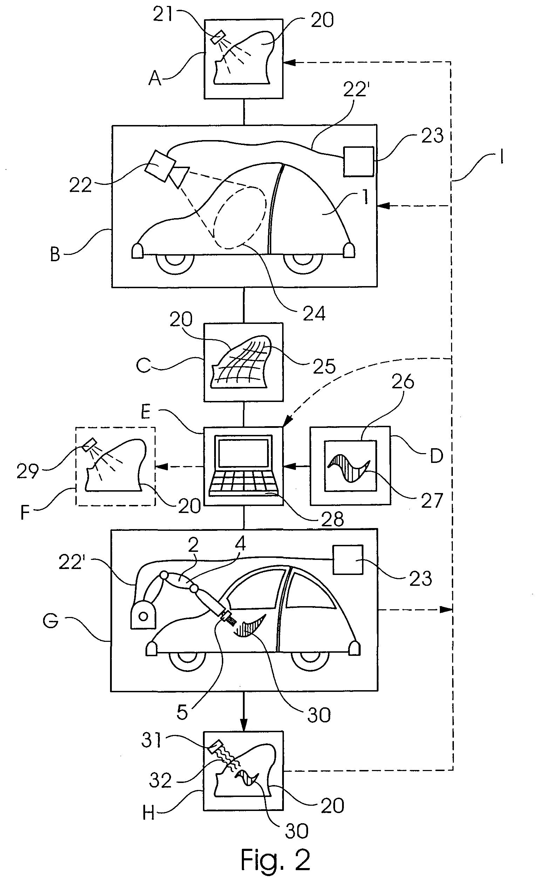

Figur 2 zeigt eine schematische Darstellung eines bevorzugten Ausführungsbeispiels eines erfindungsgemäßen Systems als Verfahrensablauf.

In **Schritt A** wird das Fahrzeug 1 entsprechend Ziffer 2 (siehe oben) für das Vermessen vorbereitet. Hierzu wird die Karosserie 20 zumindest abschnittsweise mittels einer Reinigungsvorrichtung 21 gereinigt und ggf. anschließend getrocknet und gepudert.

In **Schritt B** wird das Fahrzeug entsprechend Ziffer 3 (siehe oben) vermessen. Die Messvorrichtung 22 erfasst die Oberfläche des Fahrzeugs 1 in Messbereichen 24 und leitet die Messdaten über eine Verbindung 22' einem Rechner 23 zu.

In **Schritt C** werden die gemessenen Fahrzeugdaten entsprechend Ziffer 4 (siehe oben) überarbeitet, d.h. es wird aus einer Punktewolke von Oberflächenpunkten der Karosserie 20, der Scheiben und evtl. vorhandener Aufbauten wie Spiegel eine Netz 25 berechnet, das die vermessenen Oberfläche mit der für das anschließende Drucken notwendigen Genauigkeit (bevorzugt etwa 1/10 mm) widergibt.

In **Schritt D** werden die Daten des druckenden Bildes 26 entsprechend Ziffer 1 (siehe oben) vorbereitet, d.h. zunächst ausgewählt und dann vorverarbeitet, z.B. Transformationen wie Verzerrungen 27 unterzogen, so dass das ausgewählte Bild an den Verlauf der Fahrzeug-Oberfläche angepasst wird.

In **Schritt E** werden einem Rechner 28, der mit dem Rechner 23 identisch sein kann, sowohl die gemessenen und weiterverarbeiteten Daten 25 der Fahrzeug-Oberfläche als auch Daten zu dem zu druckenden Bild 26 zur Verfügung gestellt. Der Rechner 28 führt nun den so genannten 3D-RIP entsprechend Ziffer 4 (siehe oben) durch.

In einem optionalen **Schritt F** wird das Fahrzeug 1 bzw. dessen Karosserie vor dem Bedrucken entsprechend Ziffer 5 (siehe oben) mittels einer Reinigungsvorrichtung 29 zumindest abschnittsweise gereinigt, z.B. um den Puder zu entfernen.

In **Schritt G** erfolgt nun das Bedrucken entsprechend Ziffer 6 (siehe oben) mittels des Systems 2 aus Roboter 4 und Druckkopf 5. Dabei steuert der Rechner 23 oder ein anderer Rechner über eine Verbindung 22' die Bahnführung und die Tintenabgabe derart, dass das Bild 30 auf der Karosserie entsteht.

In **Schritt H** wird das fertige Bild 30 mittels einer Trockenvorrichtung 31, z.B. einem UV-Strahlung 32 abgebenden Trockner, soweit entsprechend Ziffer 7 (siehe oben) getrocknet, dass das Fahrzeug vom System 2 entfernt werden kann oder dass in einem **Schritt I** ein weiterer Durchlauf des Verfahrens beginnend bei A, B oder E erfolgen kann.

### Bezugszeichenliste

- 1: Fahrzeug
- 2: System
- 3: Basis
- 4: Roboter
- 5: Tintenstrahl-Druckkopf
- 6: Tröpfchen
- 7: Bild
- 8: Kotflügel
- 8': Bereich
- 9: Außenspiegel
- 10: Türgriff
- 10': Bereich
- 11: Spalt
- 11': Bereich
- 12: Scheibe
- 12': Bereich
- 20: Karosserie
- 21: Reinigungsvorrichtung
- 22: Messvorrichtung
- 22': Verbindung
- 23: Rechner
- 24: Messbereich
- 25: Netz
- 26: zu druckendes Bild
- 27: Transformationen
- 28: Rechner
- 29: Reinigungsvorrichtung
- 30: Bild
- 31: Trockenvorrichtung
- 32: UV-Strahlung
- A: Verfahrensschritt (Reinigung)
- B: Verfahrensschritt (Vermessen)
- C: Verfahrensschritt (Verarbeitung Fahrzeugdaten)
- D: Verfahrensschritt (Verarbeitung Bilddaten)
- E: Verfahrensschritt (Erstellung Raster-Matrix)
- F: Verfahrensschritt (Reinigung)
- G: Verfahrensschritt (Bedrucken)
- H: Verfahrensschritt (Trocknen)
- I: Verfahrensschritt (weiterer Durchlauf)

## Patentansprüche

1. Verfahren zum Bedrucken eines Objekts, wobei wenigstens ein Bereich der Oberfläche des Objekts (1) bedruckt wird, mit den folgenden Verfahrensschritten:
- Bereitstellen eines Bildes (7, 26);
- Bereitstellen von dreidimensionalen Daten des Objekts (1) durch dreidimensionales Vermessen (B) wenigstens des Bereichs (24) oder durch Laden von dreidimensionalen Daten des Objekts (1) aus allgemein zugänglichen Datenbanken oder aus Datenbanken eines Dienstleisters, eines Systemanbieters oder eines Herstellers des Objekts;
- Erzeugen einer mit dem Bereich korrespondierenden Menge von Raumpunkten (C);
- Erzeugen eines mit dem Bereich korrespondierenden, dreidimensionales Netzes (C);
- Erzeugen von Bahn-Daten, d.h. einer dreidimensionalen Bahn zur Bewegung eines Roboters (4) für einen Tintenstrahl-Druckkopf (5), wobei Bereiche definiert werden, in die der Roboter (4) nicht eindringen darf, und Bereiche, in denen sich der Roboter (4) frei bewegen kann, oder Erzeugen von Bahn-Daten, d.h. einer dreidimensionalen Bahn zur Bewegung eines Roboters (4) für einen Tintenstrahl-Druckkopf (5), wobei die jeweiligen Abstände von Düsen des Tintenstrahl-Druckkopfs (5) zur Oberfläche des Objekts (1) zu einem bestimmten Zeitpunkt möglichst gleich zueinander sind;
- Erzeugen von Raster-Daten (E), d.h. einer Raster-Matrix zur Ansteuerung des Tintenstrahl-Druckkopfes (5);
- Bewegen des Roboters (4) unter Verwendung der Bahn-Daten ; und
- Drucken (G) des Bildes (7, 26) mit dem Tintenstrahl-Druckkopf (5) unter Verwendung der Raster-Daten.

2. Verfahren nach Anspruch 1,
**gekennzeichnet durch** wenigstens einen der folgenden Verfahrensschritte des Synchronisierens
- Drucken (G) des Bildes (7, 26) in Abhängigkeit der Bewegung des Roboter (4); oder
- Bewegen des Roboters (4) in Abhängigkeit des zu druckenden Bildes (7, 26).

3. Verfahren nach Anspruch 1,
**gekennzeichnet durch** den Verfahrensschritt
- Trocknen (H) und/oder Härten und/oder Pinnen der Farbe oder des Lacks mit einem Roboter-geführten Trocknerkopf nach dem Drucken (G), insbesondere unter Einsatz von ultravioletter Strahlung, NIR-Strahlung, IR-Strahlung, Heißluft und/oder Laserstrahlung.

4. Verfahren nach Anspruch 1,
**gekennzeichnet durch** den Verfahrensschritt
- Reinigen (A), insbesondere Waschen und Trocknen, und optional Pudern wenigstens des Bereichs vor dem dreidimensionalen Vermessen (B).

5. Verfahren nach Anspruch 1,
**gekennzeichnet durch** einen der folgenden Verfahrensschritte
- Statisches dreidimensionales Vermessen (B) des Bereiches unter Einsatz eines während des Messens ortsfesten Messsystems (22); oder
- Dynamisches dreidimensionales Vermessen (B) des Bereich unter Einsatz eines Roboter-geführten Mess-Kopfes (22).

6. Verfahren nach Anspruch 1,
**gekennzeichnet durch** den Verfahrensschritt
- Auftragen einer Grundierung und/oder eines Primers wenigstens im Bereich vor dem Drucken (G).

7. Verfahren nach Anspruch 1,
**gekennzeichnet durch** einen der Verfahrensschritte
- Drucken (G) eines ersten Teiles des Bildes (7, 26) mit dem Tintenstrahl-Druckkopf (5);
- Bewegen, insbesondere Drehen, des Objekts (1) in eine veränderte Position; und
- Drucken (G) eines zweiten Teiles des Bildes (7, 26) mit dem Tintenstrahl-Druckkopf (5).

8. Verfahren nach Anspruch 1,
**gekennzeichnet durch** den Verfahrensschritt
- Wechsel des Tintenstrahl-Druckkopfes (5) gegen einen anderen, verschiedenartigen Druckkopf (5), insbesondere einen verschiedenartigen Tintenstrahl-Druckkopf (5).

9. Verfahren nach Anspruch 1,
**gekennzeichnet durch** den Verfahrensschritt
- dass **durch** Beachten der Bereiche, in die der Roboter (4) nicht eindringen darf, erreicht wird, dass der Roboter (4) nicht mit dem Objekt (1) kollidiert und einen Mindestabstand einhält.

10. Verfahren nach Anspruch 9,
**gekennzeichnet durch** den Verfahrensschritt
- dass erreicht wird, dass weder der am Roboter (4) aufgenommene Tintenstrahl-Druckkopf (5), noch der gesamte Roboter (4), d.h. seine Armteile und Gelenke, mit dem Objekt (1) kollidiert und einen Mindestabstand einhält.

11. System zum Bedrucken eines Objekts, welches wenigstens einen Bereich der Oberfläche des Objekts (1) bedruckt, mit den folgenden Merkmalen:
- eine Reinigungsvorrichtung (29) zum Reinigen wenigstens des Bereichs;
- eine Messvorrichtung (22) zum dreidimensionalen Vermessen wenigstens des Bereichs und zur Erzeugung von Messergebnissen zum Bereitstellen von dreidimensionalen Daten des Objekts (1) oder eine Vorrichtung zum Bereitstellen von dreidimensionalen Daten des Objekts (1) durch Laden von dreidimensionalen Daten des Objekts (1) aus allgemein zugänglichen Datenbanken oder aus Datenbanken eines Dienstleisters, eines Systemanbieters oder eines Herstellers des Objekts;
- ein Rechner (28) zum Erzeugen einer Raster-Matrix;
- eine Vorrichtung zum Erzeugen von Bahn-Daten, d.h. einer dreidimensionalen Bahn zur Bewegung eines Roboters (4) für einen Tintenstrahl-Druckkopf (5), wobei Bereiche definiert werden, in die der Roboter (4) nicht eindringen darf, und Bereiche, in denen sich der Roboter (4) frei bewegen kann oder zum Erzeugen von Bahn-Daten, d.h. einer dreidimensionalen Bahn zur Bewegung eines Roboters (4) für einen Tintenstrahl-Druckkopf (5), wobei die jeweiligen Abstände von Düsen des Tintenstrahl-Druckkopfs (5) zur Oberfläche des Objekts (1) zu einem bestimmten Zeitpunkt möglichst gleich zueinander sind;,
- ein Roboter (4), insbesondere einer der folgenden Roboter: Gelenkarm-Roboter, Parallelkinematik-Roboter, Portalroboter;
- ein Tintenstrahl-Druckkopf (5) als Effektor (5) und optional wenigstens ein weiterer Effektor (5), insbesondere einer der folgenden Köpfe: UV-Trocken-Kopf, Mess-Kopf, Projektionskopf;
- ein Rechner (23) zur Ansteuerung des Roboters; und
- ein Rechner zur Ansteuerung des Effektors.

12. Verfahren zum Bedrucken eines Objekts, insbesondere eines Fahrzeugs, mit wenigstens einem Bild, wobei das Bild von einem Kunden ausgewählt wird und wobei das ausgewählte Bild von einem Dienstleister unter Anwendung wenigstens eines der vorgenannten Verfahren und/oder unter Einsatz des vorgenannten Systems an einer vom Kunden ausgewählten Oberflächenbereich auf das Objekt gedruckt wird.

13. Verfahren nach Anspruch 6,
**dadurch gekennzeichnet,**
**dass** die Grundierung oder der Primer einen Haftverringerer umfasst und
**dass** das Bild nur für eine begrenzte Zeitspanne erzeugt wird oder dass die Grundierung einen Weißlack umfasst.

## Claims

1. Method for printing on an object wherein at least a region of the surface of the object (1) is printed on, comprising the steps of
- providing an image (7, 26);
- providing three-dimensional data of the object (1) by three-dimensionally measuring (B) at least the region (24) or by downloading three-dimensional data of the object (1) from generally accessible databases or databases of a service provider, system provider, or object manufacturer;
- generating an amount of points in space (C) corresponding to the region;
- generating a three-dimensional web (C) corresponding to the region;
- generating path data, i.e. a three-dimensional path for moving a robot (4) for an inkjet printing head (5), wherein regions are defined into which the robot (4) must not intrude and regions in which the robot (4) may move freely,
or generating path data, i.e. a three-dimensional path for moving a robot (4) for an inkjet printing head (5) wherein the respective distances between nozzles of the inkjet printing head (5) and the surface of the object (1) at a specific point in time are identical with one another as far as possible;
- generating halftone data (E), i.e. a halftone matrix for controlling the inkjet printing head (5);
- moving the robot (4) using the path data; and
- printing (G) the image (7, 26) by means of the inkjet printing head (5) using the halftone data.

2. Method according to any claim 1,
**characterized**
**by** at least one of the following steps of synchronizing of
- printing (G) the image (7, 26) as a function of the movement of the robot (4); or
- moving the robot (4) as a function of the image (7, 26) to be printed.

3. Method according to claim 1,
**characterized by** the step of
- drying (H) and/or curing and/or pinning the ink or varnish by means of a robot-guided dryer head after printing (G), in particular using ultraviolet radiation, NIR radiation, IR radiation, hot air and/or laser radiation.

4. Method according to claim 1,
**characterized by** the step of
- cleaning (A) in particular washing and drying, and optionally powdering at least the region before three-dimensional measurements (B) are taken.

5. Method according to claim 1,
**characterized by** any one of the following steps of
- statically taking three-dimensional measurements (B) of the region using a measurement system (22) that is stationary during the measurement; or
- dynamically taking three-dimensional measurements (B of the region using a robot-guided measuring head (22).

6. Method according to claim 1,
**characterized by** the step of
- applying a base coat and/or a primer at least to the region before printing (G).

7. Method according to claim 1,
**characterized by** any one of the following steps of
- printing (G) a first part of the image (7, 26) using the inkjet printing head (5);
- moving, in particular rotating, the object (1) into a modified position; and
- printing (G) a second part of the image (7, 26) using the inkjet printing head (5).

8. Method according to claim 1,
**characterized by** the step of
- replacing the inkjet printing head (5) with another printing head (5) of a different type, in particular an inkjet printing head (5) of a different type.

9. Method according to claim 1,
**characterized in that**
- respecting the regions into which the robot (4) must not intrude ensures that the robot (4) does not collide with the object (1) and maintains a minimum distance.

10. Method according to claim 9,
**characterized in that**
- the method ensures that neither the inkjet printing head (5) received on the robot (4) nor the entire robot (4), i.e. its arm parts and joints, collide with the object (1) and maintain a minimum distance.

11. System for printing on at least a region of a surface of an object (1), the system comprising the following features:
- a cleaning device (29) for cleaning at least the region;
- a measuring device (22) for taking three-dimensional measurements at least of the region and for generating measurement results to provide three-dimensional data of the object (1)
or a device for providing three-dimensional data of the object (1) by downloading three-dimensional data of the object (1) from generally accessible databases or from databases of a service provider, system provider, or object manufacturer;
- a computer (28) for generating a halftone matrix;
- a device for generating path data, i.e. a three-dimensional path for moving a robot (4) for an inkjet printing head (5), wherein regions are defined into which the robot (4) must not intrude and regions in which the robot (4) may move freely,
or a device for generating path data, i.e. a three-dimensional path for moving a robot (4) for an inkjet printing head (5), wherein the respective distances between nozzles of the inkjet printing head (5) and the surface of the object (1) at a specific point in time are identical with one another as far as possible;
- a robot (4), in particular one of the following robots: an articulated robot, a parallel kinematics robot, a gantry robot;
- an inkjet printing head (5) as an effector (5) and optionally at least one further effector (5), in particular one of the following heads: UV dryer head, measurement head, projection head;
- a computer (23) for controlling the robot; and
- a computer for controlling the effector.

12. Method for printing at least one image onto an object, in particular a vehicle, wherein the image is selected by a customer and wherein a service provider prints the selected image onto a surface region selected by the customer on the object, the service provider using at least one of the aforementioned methods and/or the aforementioned system.

13. Method according to claim 6,
**characterized**
**in that** the base coat or primer comprises a tack reducer and
**in that** the image is only generated for a limited period of time or the primer comprises a white varnish.

## Revendications

1. Procédé d'impression d'un objet, pour lequel au moins une zone de la surface de l'objet (1) est imprimée, avec les étapes du procédé suivantes :
- fourniture d'une image (7, 26) ;
- fourniture de données tridimensionnelles de l'objet (1) par mesurage tridimensionnel (B) de la plage (24) au moins ou par chargement de données tridimensionnelles de l'objet (1) à partir de bases de données accessibles à tous ou de bases de données d'un prestataire de services, d'un fournisseur de systèmes ou d'un fabricant de l'objet ;
- génération d'une quantité de points spatiaux (C) correspondant à la zone ;
- génération d'un réseau tridimensionnel (C) correspondant à la zone ;
- génération de données de bande, c'est-à-dire d'une bande tridimensionnelle pour le déplacement d'un robot (4) pour une tête d'impression à jet d'encre (5), pour laquelle il est défini des zones dans lesquelles le robot (4) ne doit pas pénétrer et des zones dans lesquelles le robot (4) peut se déplacer librement, ou génération de données de bande, c'est-à-dire d'une bande tridimensionnelle pour le déplacement d'un robot (4) pour une tête d'impression à jet d'encre (5), pour laquelle les distances respectives des buses de la tête d'impression à jet d'encre (5) par rapport à la surface de l'objet (1) à un moment défini sont si possible égales entre elles ;
- génération de données de trame (E), c'est-à-dire une matrice de trame pour pilotage de la tête d'impression à jet d'encre (5) ;
- déplacement du robot (4) en utilisant les données de la bande ; et
- impression (G) de l'image (7, 26) avec la tête d'impression à jet d'encre (5) en utilisant les données de trame.

2. Procédé selon la revendication 1,
**caractérisé par** au moins une des étapes du procédé de synchronisation suivantes
- impression (G) de l'image (7, 26) en fonction du déplacement du robot (4) ; ou
- déplacement du robot (4) en fonction de l'image à imprimer (7, 26).

3. Procédé selon la revendication 1,
**caractérisé par** l'étape du procédé
- séchage (H) et/ou durcissement et/ou ancrage partiel sur le substrat de l'encre ou du vernis avec une tête de séchage opérée par un robot après l'impression (G), notamment en utilisant le rayonnement ultraviolet, le rayonnement infrarouge proche, le rayonnement infrarouge, l'air chaud et/ou le rayonnement laser.

4. Procédé selon la revendication 1,
**caractérisé par** l'étape du procédé
- nettoyage (A), notamment lavage et séchage et en option poudrage de la zone avant le mesurage tridimensionnel (B).

5. Procédé selon la revendication 1,
**caractérisé par** l'une des étapes du procédé suivantes
- mesurage tridimensionnel statique (B) de la zone en utilisant un système de mesure (22) fixe durant la mesure ; ou
- mesurage tridimensionnel dynamique (B) de la zone en utilisant une tête de mesure (22) opérée par robot.

6. Procédé selon la revendication 1,
**caractérisé par** l'étape du procédé
- application d'un fond et/ou d'un primaire dans la zone avant l'impression (G).

7. Procédé selon la revendication 1,
**caractérisé par** l'une des étapes du procédé
- Impression (G) d'une première partie de l'image (7, 26) avec la tête d'impression à jet d'encre (5) ;
- Déplacement, notamment rotation, de l'objet (1) dans une position modifiée ; et
- Impression (G) d'une deuxième partie de l'image (7, 26) avec la tête d'impression à jet d'encre (5).

8. Procédé selon la revendication 1,
**caractérisé par** l'étape du procédé
- Remplacement de la tête d'impression à jet d'encre (5) par une autre tête d'impression (5) différente , notamment une tête d'impression à jet d'encre (5) différente.

9. Procédé selon la revendication 1,
**caractérisé par** l'étape du procédé
- qu'en tenant compte des zones dans lesquelles le robot (4) ne doit pas pénétrer, il est obtenu que le robot (4) n'entre pas en collision avec l'objet (1) et que le respect d'une distance minimale soit assuré.

10. Procédé selon la revendication 9,
**caractérisé par** l'étape du procédé
- qu'il est obtenu que ni la tête d'impression à jet d'encre (5) logée sur le robot (4), ni le robot (4) intégral, c'est-à-dire les éléments de ses bras et ses articulations, n'entre en collision avec l'objet (1) et que le respect d'une distance minimale soit assuré.

11. Système d'impression d'un objet qui imprime au moins une zone de la surface de l'objet (1) avec les caractéristiques suivantes :
- un dispositif de nettoyage (29) pour nettoyer au moins la zone ;
- un dispositif de mesure (22) pour le mesurage tridimensionnel de la zone au moins et pour la génération de résultats de mesure pour fourniture de données tridimensionnelles de l'objet (1) ou un dispositif pour fourniture de données tridimensionnelles de l'objet (1) par chargement de données tridimensionnelles de l'objet (1) à partir de bases de données accessibles à tous ou de bases de données d'un prestataire de services, d'un fournisseur de systèmes ou d'un fabricant de l'objet ;
- un calculateur (28) pour la génération d'une matrice de trame ;
- un dispositif pour la génération de données de bande, c'est-à-dire d'une bande tridimensionnelle pour le déplacement d'un robot (4) pour une tête d'impression à jet d'encre (5), pour laquelle il est défini des zones dans lesquelles le robot (4) ne doit pas pénétrer et des zones dans lesquelles le robot (4) peut se déplacer librement, ou pour la génération de données de bande, c'est-à-dire d'une bande tridimensionnelle pour le déplacement d'un robot (4) pour une tête d'impression à jet d'encre (5), pour laquelle les distances respectives des buses de la tête d'impression à jet d'encre (5) par rapport à la surface de l'objet (1) à un moment défini sont si possible égales entre elles ;
- un robot (4), notamment l'un des robots suivants : robot à bras articulé, robot à cinématique parallèle, robots portiques ;
- une tête d'impression à jet d'encre (5) comme effecteur (5) et, en option, au moins un autre effecteur (5), notamment l'une des têtes suivantes : tête de séchage UV, tête de mesure, tête de projection ;
- un calculateur (23) pour pilotage du robot ; et
- un calculateur pour pilotage de l'effecteur.

12. Procédé d'impression d'un objet, notamment d'un véhicule, avec au moins une image, pour lequel l'image est sélectionnée par un client et pour lequel l'image sélectionnée est imprimée sur l'objet, sur une zone de la surface sélectionnée par le client, par un prestataire de services, en utilisant au moins l'un des procédés susmentionnés et/ou en utilisant le système susmentionné.

13. Procédé selon la revendication 6,
**caractérisé en ce**
**que** le fond ou le primaire comprend un réducteur d'adhérence et que l'image n'est générée que pour une période limitée, ou bien que le fond comprend une laque blanche.
